# EUROPEAN PATENT APPLICATION

(11) **EP 4 275 815 A1**
(43) Date of publication of application: **15.11.2023**
(21) Application number: 22172350.5
(22) Date of filing: 09.05.2022
(51) Int. Cl.: B22F 7/06, C22C 1/05, C22C 29/06, C22C 29/08, B22F 5/00

(54) **DOUBLE PRESSED CHROMIUM ALLOYED CEMENTED CARBIDE INSERT**

(71) Applicant: Sandvik Mining and Construction Tools AB, 81181 Sandviken (SE)
(72) Inventor: ÖSTHOLS, Erik, 141 31 Huddinge (SE)
(74) Representative: Sandvik

(57) **Abstract**

A sintered cemented carbide insert for mining or cutting applications comprising: a first zone comprising: 3-18 wt% binder phase; unavoidable impurities; a balance of tungsten carbide having a mean grain size of between 0.5-20 µm; and a second zone comprising: the same amount, within +/-3 wt%, of binder phase as the first zone; any unavoidable impurities; a balance of tungsten carbide having a mean grain size of between 0.5-20 µm; wherein the first zone and the second zone (6) are adjacent to each other; wherein the average WC grain size in the first zone is different to the average WC grain size in the second zone; and the binder phase in both the first zone and the second zone comprise between 2-15 wt% Cr measured as a fraction of the total binder content.

## Description

### TECHNICAL FIELD

The present invention relates to a cemented carbide insert for mining or cutting applications produced by double pressing.

### BACKGROUND

Cemented carbide has a unique combination of high elastic modulus, high hardness, high compressive strength, high wear and abrasion resistance together with a good level of toughness. Therefore, cemented carbide is commonly used in products such as mining and cutting inserts. Cemented carbide comprises a hard ceramic (carbide) phase and a binder phase.

Typically, a single powder grade is pressed to form the mining or cutting insert, resulting in uniform material properties throughout the insert. However, it is often desirable to have different material properties in different parts of the inserts. For example, it may be desirable to have one set of mechanical properties in, e.g., a zone at the working surface and a different set of mechanical properties in a second zone, e.g. in the bulk of the insert, in order to optimise the lifetime and performance of the inserts. Therefore, attempts have previously been made to use double pressing methods, using powders having different compositions in different parts of the green body, with the aim of creating a sintered body with different mechanical properties in different parts of the body.

However, this does not usually result in the desired differences in mechanical or other properties between different parts of the sintered body as the binder phase will, all other things equal, migrate from the larger grain size zone to the smaller grain size zone during sintering, thus countering any difference in the hardness and toughness that would have been achieved from the different grain sizes.

Therefore, the problem to be solved is how to provide an insert having a harder zone and a tougher zone, using a double pressing method.

### DEFINITIONS

By "cemented carbide" is herein meant a material that comprises at least 50 wt% WC, possibly other hard constituents common in the art of making cemented carbides and a metallic binder phase preferably selected from one or more of Fe, Co and Ni.

The term "green body" refers to a cemented carbide item produced by milling the hard phase component(s) and a binder together, making a powder thereof and then pressing the powder to form a compact cemented carbide, which has not yet been sintered.

### SUMMARY OF INVENTION

According to a first aspect of the present invention there is a sintered cemented carbide insert for mining or cutting applications comprising: a first zone comprising: 3-18 wt% binder phase; any unavoidable impurities; a balance of tungsten carbide having a mean grain size of between 0.5-20 µm; and a second zone comprising: the same amount, within +/-3 wt%, of binder phase as the first zone; any unavoidable impurities; a balance of tungsten carbide having a mean grain size of between 0.5-20 µm; wherein the first zone and the second zone are adjacent to each other; wherein the average WC grain size in the first zone is different to the average WC grain size in the second zone; characterized in that: the binder phase in both the first zone and the second zone comprise between 2-15 wt% Cr measured as a fraction of the total binder content.

Advantageously, the presence of the chromium in both the first zone and the second zone prevents cobalt migration from the zone having the larger average WC grain size to the zone having the smaller average WC grain size. This results in the original properties of the powder grade used in each of the different zones being maintained, keeping the desired properties for the application. If there is too much Cr added, then the mechanical properties of the material may deteriorate. If there is insufficient Cr, then the migration of the binder between the different zone will occur.

Further, the presence of the chromium improves the plastic deformation of the cemented carbide, this enables higher compressive stresses to be introduced into the carbide when it is treated with a surface tumbling treatment, such as tumbling. This increase in compressive stress provides an apparent hardness increase which improves the wear resistance of the cemented carbide, without reducing the toughness.

Another aspect of the present invention relates to a method of producing a cemented carbide insert comprising the steps of:
a) providing a first powder comprising between 3-18 wt% binder, 2-15 wt% Cr measured as a fraction of the total binder content, and any unavoidable impurities and a balance of WC hard phase having a grain size of 0.5-20 µm;
b) pre-punching the first powder to provide a first part of a green body;
c) providing a second powder comprising between 3-18 wt% binder, 2-15 wt% Cr and any unavoidable impurities and a balance of WC hard phase having a grain size of 1-20 µm;
d) pressing the second powder on top of the first part of the green body to provide a second part of the of the green body;
c) sintering the entire green body to form the sintered cemented carbide insert having a first zone and a second zone.

Advantageously, this method produces an insert wherein the original properties of the powders are maintained post sintering, therefore enabling products to be created having the different desired material properties in different regions of the product.

### BRIEF DESCRIPTION OF DRAWINGS

Figure 1: Schematic of an insert having a straight interface.
Figure 2: Schematic of an insert having a domed interface.
Figure 3: Hardness profile of an inventive sample.
Figure 4: Plot of cobalt content for inventive sample.
Figure 5: Hardness profile of comparative sample.
Figure 6: Plot of cobalt content for comparative sample.
Figure 7: Hardness profile of comparative sample.
Figure 8: Plot of cobalt content for comparative sample.

### DETAILED DESCRIPTION

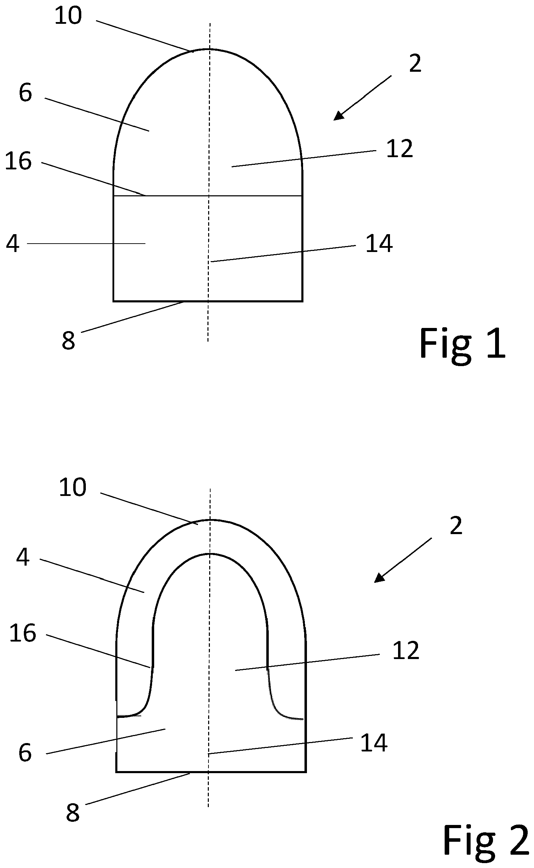

Figure 1 shows a sintered cemented carbide insert 2 for mining or cutting applications: comprising: a first zone 4 comprising: 3-18 wt% binder phase; any unavoidable impurities; a balance of tungsten carbide having a mean grain size of between 0.5-20 µm; and a second zone 6 comprising: the same amount, within +/-3 wt%, of binder phase as the first zone; any unavoidable impurities; a balance of tungsten carbide having a mean grain size of between 0.5-20 µm; wherein the first zone 4 and the second zone 6 are adjacent to each other; wherein the average WC grain size in the first zone 4 is different to the average WC grain size in the second zone; characterized in that: the binder phase in both the first zone 4 and the second zone 6 comprise between 2-15 wt% Cr measured as a fraction of the total binder content.

Preferably, the binder phase in both the first zone 4 and the second zone 6 comprise 3 - 10 wt% Cr measured as a fraction of the total binder content. The chromium content in the binder phase in the first zone 4 and the second zone 6 could be the same or different.

Preferably, the binder phase content in the first zone 4 and the second zone 6 is between 4-15 wt%.

Preferably, the average WC grain in each of the first zone 4 and the second zone 6 is between 1.0-16 µm.

Preferably, the binder phase comprises at least 80 wt% of one or more of cobalt, nickel, iron or a combination thereof.

Preferably, the binder phase comprises Co and / or Ni, most preferably Co, even more preferably between 3 to 20 wt% Co alloyed with chromium. Optionally, the binder is a nickel chromium or nickel aluminium alloy alloyed with chromium.

To a great extent the Cr is dissolved into the binder phase, however there could be some amount, e.g. up to 3 mass%, of undissolved chromium carbide in the cemented carbide body.

The zone having the larger average WC grain size could be either the first zone 4 or the second zone 5.

Average WC grain size is evaluated using the Jeffries method according to "The determination of grain size in metals", Z. Jeffries, A.H. Kline, E.B. Zimmer, Transactions of the AIME, vol 54, pp. 594-607, 1916; "Grain-size measurements in metals, and importance of such information", Z. Jeffries, Transactions of the Faraday Society, Vol. 12., pp 40-56, 1916 and "Grain-size measurements", Z. Jeffries, Metallurgical and Chemical Engineering, vol. 18, p. 185, 1918.

In one embodiment one or more hard carbides selected from TiC, TaC and / or NbC are present in the first zone 4 and / or the second zone 6. For example, the first zone and / or the second zone may comprise between 0.2-6 wt% of TiC, TaC and / or NbC.

In one embodiment the difference in average grain size between the first zone 4 and the second zone 6 is > 0.5 µm. If the difference in average grain size is too small, then no hardness and toughness gradient would be created. Preferably the difference in average grain size between the first zone 4 and the second zone 6 is >1 µm, more preferably > 2 µm, even more preferably > 3 µm, even more preferably > 4 µm, even more preferably > 5 µm. In one embodiment the difference in average grain size between the first zone 4 and the second zone 6 is between 0.5 - 14 µm.

In one embodiment the difference between the binder phase content in the first zone 4 and the second zone 6 is less than 1.5 wt%, preferably <1.2 wt%. Advantageously, lower differences in Co content lead to less Co diffusion when sintering.

In another embodiment, the binder phase content in the first zone 4 and the second zone 6 is the same.

In one embodiment, as shown in figure 1, the insert comprises a base 8; a working tip 10; a core 12 and a longitudinal central axis 14. It should however be understood that the insert 2 could have a different form.

In one embodiment, as shown in figure 1, the first zone 4 is positioned at the base 8 and the second zone 6 is positioned at the working tip 10.

Figure 2 shows that alternatively, the first zone 4 is positioned at the working tip 10 and the second zone is positioned at the base 8.

In one embodiment the first zone 4 could have a smaller average WC grain size than the second zone 6. Alternatively, the first zone 4 could have a larger average WC grain size than the second zone 6.

In one embodiment the first zone 4 has an average WC grain size of between 1-2 µm and the second zone 6 has an average WC grain size between 3-16 µm. Advantageously, this provides an insert having a harder working tip and a tougher base or core which will result in increased the working lifetime of the insert.

Alternatively, the first zone 4 has an average WC grain size of between 3-16 µm and the second zone 6 has an average WC grain size between 1-2 µm.

In one embodiment, the hardness difference between the first zone 4 and the second zone 6 is > 50 HV20, preferably >70 HV20. Advantageously, this provides an insert having a harder zone and a tougher zone, which increases the working lifetime of the insert. The hardness of the cemented carbide inserts is measured using Vickers hardness measurement. The cemented carbide bodies are sectioned along the longitudinal axis and polished using standard procedures. The hardness is measured according to ISO EN6507 3:2005.

In one embodiment, as shown in figure 1, the interface 16 between the first zone 4 and the second zone 6 is substantially straight. Advantageously, this is easy to manufacture.

In one embodiment, as shown in figure 2, the interface 16 between the first zone 4 and the second zone 6 is dome shaped. Advantageously, this enables a more wear resistant working surface to be formed.

The interface 16 could be any other geometry as required to suit the product and any geometry of interface 16 could be combined with any arrangement of the first zone 4 and the second zone 6.

In one embodiment of the present invention, the cemented carbide in the first zone 4 and / or second zone 6 comprises M₇C₃ carbides and / or M₂₃C₆ carbide, and possibly also M₃C₂ carbides, where M is Cr and possibly one or more of W, Co and any other elements added to the cemented carbide. By that is herein meant that the M₇C₃ and / or M₂₃C₆ carbide carbides should be clearly visible in a SEM (scanning electron microscope) image using backscattering at a magnification large enough to detect particles of a size of 100 nm. In one embodiment of the present invention, the cemented carbide comprises M₇C₃ carbides and / or M₂₃C₆ carbides in an amount given by the ratio vol% (M₇C₃ carbides and / or M₂₃C₆ carbide) / vol% Co. Suitably the ratio vol% (M₇C₃ carbides and / or M₂₃C₆ carbide) / vol% Co is between 0.01 to 0.5 preferably between 0.03 to 0.25. The vol% of M₇C₃ carbides and / or M₂₃C₆ carbide and the Co binder can be measured by EBSD or image analysis using a suitable software.

In one embodiment the cemented carbide in the first zone 4 and / or the second zone 6 is free from eta phase and graphite. If the binder phase consists of cobalt, the cemented carbide will be free from eta phase and graphite when the Com/Co ratio is 0.75 ≤ Com/Co≤0.98. The metals used as binder phase in cemented carbides, like Co, Ni, and Fe are ferromagnetic. The saturation magnetization is the maximum possible magnetization of ferromagnetic material, characterized by parallel orientation of all magnetic moments inside the material. A Foerster KOERZIMAT 1.096 is used to determine the magnetic saturation (Com) dipole moment jS and the derived weight specific saturation magnetization oS (4πσ) of the inserts. The Co content is then measured with XRF (X-ray fluorescence) using a Malvern Panalytical Axios Max Advanced instrument. The Com/%Co range that is between eta phase and graphite formation is affected by changing the binder composition, such as by adding Cr, Fe, Ni etc.

The solubility of W in the binder phase is directly related to the carbon content. The amount of W in the binder increases with decreasing carbon content until the limit for eta phase formation is reached. If the carbon content would decrease even lower, the solubility of W in the binder will not increase further. In some cemented carbide grades where it is beneficial to obtain a high amount of W dissolved in the binder, the carbon content has been kept low but above the limit for eta phase formation.

In another embodiment of the present invention, the cemented carbide substrate in the first zone 4 and / or the second zone 6 comprises eta phase comprising Me12C and/or Me6C carbides where Me is one or more metals selected from W, Mo and the binder phase metals. The cemented carbides have a Com/Co ratio ≤ 0.69. If other constituents are added e.g. grain growth inhibitors, gamma phase formers etc to the cemented carbide, the Com/Co ratio will be influenced. The eta phase formed is, however, not present as large agglomerates. Commonly, eta phase has been considered as unwanted in cemented carbide due to that it has traditionally been present in large agglomerates of eta phase grains, which are brittle and detrimental to the cemented carbide properties. The cemented carbide according to this embodiment of the present invention, should have an evenly distributed eta phase, by that is herein meant that the cemented carbide is free from large agglomerates. The amount of eta phase is at least 2 vol%, preferably at least 4 vol%. By providing the non-agglomerated eta phase by selecting a certain range of sub-stoichiometric carbon content as in the cemented carbide of this embodiment, the cemented carbide shows good properties. The eta phase is present in the microstructure as a fine dispersed phase. Common carbides of the eta phase are W6Co6C, W3Co3C, W6Ni6C, W3Ni3C, W6Fe6C, W3Fe3C. In one embodiment the eta phase comprises both Me12C and Me6C.

In one embodiment, the insert comprises more than two zones, each of the zones having a different average WC grain size.

Another aspect of the present invention relates to a method of producing a cemented carbide insert comprising the steps of:
a) providing a first powder comprising between 3-18 wt% binder, 2-15 wt% Cr measured as a fraction of the total binder content, and any unavoidable impurities and a balance of WC hard phase having a grain size of 0.5-20 µm;
b) pre-punching the first powder to provide a first part of a green body;
c) providing a second powder comprising between 3-18 wt% binder, 2-15 wt% Cr and any unavoidable impurities and a balance of WC hard phase having a grain size of 0.5-20 µm;
d) pressing the second powder on top of the first part of the green body to provide a second part of the of the green body;
c) sintering the entire green body to form the sintered cemented carbide insert having a first zone 4 and a second zone 6.

The Cr is normally added to the powder blend in the form of Cr₃C₂ as this provides the highest proportion of Cr per gram of powder, although it should be understood that the Cr could be added to the powder blend using an alternative chromium carbide such as Cr₂₆C₂ or Cr₇C₃ or a chromium nitride or even an oxide.

In one embodiment after sintering the cemented carbide insert 2 is tumbled. Advantageously, tumbling introduces compressive stresses into the insert 2.

To introduce higher levels of compressive stresses into the cemented carbide mining insert, a high energy tumbling (HET) process may be used. HET tumbling may typically be performed using an ERBA 120, having a disc size of about 600 mm, run at about 180 RPM if the tumbling operation is either performed without media or with media that is larger in size than the inserts being tumbled, or at about 240 RPM if the media used is smaller in size than the inserts being tumbled; Using a Rösler tumbler, having a disc size of about 350 mm, at about 280 RPM if the tumbling operation is either performed without media or with media that is larger in size than the inserts being tumbled, or at about 320 RPM if the media used is smaller in size than the inserts being tumbled. Typically, the parts are tumbled for at least 40-80 minutes.

In one embodiment, the high energy tumbling treatment is conducted at an elevated temperature of or above 100°C, preferably at a temperature of or above 200°C, more preferably at a temperature of between 200°C and 450°C. The advantage the elevated tumbling temperature is that an increased toughness of the carbide and hence the collisions do not result in defects such as micro cracks, large cracks or edge chipping. The higher level of compressive stress in combination with decreased collision defects will improve the fatigue resistance and fracture toughness of the mining insert and consequently increase the lifetime of the insert. Further advantages of this method are that insert geometries, such as those with a sharp bottom radius, which were previously prone to excessive damage to the corners and therefore low yields, can now be tumbled without causing edge damage. This opens the possibility to develop mining insert products with different geometries, which were previously not suitable for tumbling. The method also makes it possible to use cemented carbide compositions that would have previously been too brittle for mining applications The ability to introduce higher levels of compressive stress means that the toughness of the mining inserts is increased to an acceptable level and thus mining inserts having a higher hardness can be used which is beneficial for increasing the wear resistance of the mining inserts.

In one embodiment the pressing pressure used for the pre-punching of the first powder is less than the pressing pressure used for pressing the second powder on top of the first part of the green body. Advantageously, this results in reduced cracking.

In one embodiment, prior to step sintering a liquid dispersion or slurry comprising a grain refiner compound comprising a grain refiner and carbon and/or nitrogen, and a grain growth promoter being carbon, is applied to least one portion of the surface of a green body of the cemented carbide, the grain refiner compound and the grain growth promoter are both provided onto the surface or surfaces in an amount of from 0.1 to 100 mg/cm².

The grain refiner compound is a carbide, mixed carbide, carbonitride or a nitride, the grain refiner compound and grain growth promoter is provided on the surface of the compact by first providing a compact and then providing the grain refiner compound and the grain growth promoter on at least one portion of the surface of the compact, the grain refiner compound and grain growth promoter is provided by application in the form of a separate or combined liquid dispersion or slurry to the compact, the weight ratio of grain refiner compound to grain growth promoter is from about 0.05 to about 50. The compact is sintered after the grain refiner compound and grain growth promotor have been applied to the surface of the compact prior to the surface hardening treatment.

The grain refiner compound is preferably a carbide or nitride of chromium or vanadium. Further details on the method for applying the grain refiner compound and grain growth promoter to the surface of the cemented carbide compacts can be found in EP2355948B1.

In one embodiment, prior to sintering at least a metal oxide or a metal carbonate is applied to at least one position of the surface of the green cemented carbide insert. Advantageously, this redistributes the binder in a tailored and most favourable manner to provide optimal functionality to the cemented carbide mining insert in combination with introducing higher levels of compressive stresses into the cemented carbide mining insert.

In one embodiment of the method, the binder puller, being a metal oxide or metal carbonate is selected from Cr₂O₃, MnO, MnO₂, MoO₂, Fe-oxides, NiO, NbO₂, V₂O₃, MnCO₃, FeCO₃, CoCO₃, NiCO₃, CuCO₃ or Ag₂CO₃. It would also be possible to alternatively apply a metal to the surface of the green cemented carbide mining insert which upon heating, during the sintering step, would form an oxide. The selection of the metal oxide or metal carbonate will influence the properties of the cemented carbide post sintering e.g. deformation hardening, heat resistance and / or corrosion resistance and the selection can be made to be best suited to the required application. Metal carbonates would be selected if the equivalent metal oxide is toxic and the metal carbonate is not. In this method, there is a high degree of freedom as to where the binder puller is applied, for example it could be applied in or away from the wear zones of the carbide tool, depending on whether the metal in the oxide or carbonate improves the wear resistance of the cemented carbide or not.

In one embodiment of the method, the binder puller is Cr₂O₃. Using Cr₂O₃ as the binder puller has the advantage that a chromium alloy rich surface layer will form, which has an enhanced response to a tumbling treatment. Therefore, higher compressive stresses will be introduced, and the wear properties of the cemented carbide mining insert will be improved. The Cr₃O₂ contributes towards grain refinement and hence, a reduced grain size is measured on the side of the insert where the Cr₃O₂ has been applied.

In one embodiment, the tool used for the pre-punch is curved. Advantageously, this compacts the corners, thus avoiding the creation of sharp corners which aids in preventing the first part of the green body from collapsing after the pre-punch.

According to one embodiment, the cemented carbide inserts are mounted in a rock drill bit body of a top-hammer (TH) device or a down-the-hole (DTH) drilling device or a rotary drilling device or a cutting disc device. The rotary drilling device may be an oil and gas rotary cutter device. The invention also relates to a rock drill or cutting device, in particular a top-hammer device, or a down-the-hole drilling device, or a rotary drilling device, or a cutting disc device as well as the use of a cemented carbide insert according to the invention in such a device.

Another aspect of the present disclosure relates to the use of the cemented carbide mining insert as described hereinbefore or hereinafter for rock drilling or oil and gas drilling.

### EXAMPLES

### Example 1 (invention)

An insert was pressed from two WC/Co powders, both with 6 w% Co and 0.6 w% Cr in the binder, but with different WC grain sizes in the green body, 1.5 µm in the top half and 1.0 µm in the bottom half (the powder ratio was approximately 50/50 % by volume). The green body was symmetrical around a central axis, and approximately 17 mm high and 12 mm wide. The 20 kg load Vickers hardness (HV20) of sintered bodies of the pure top powder was 1559, and HV20 of the pure sintered bottom powder was 1781. The Co-magnetic value was similar in the two powders.

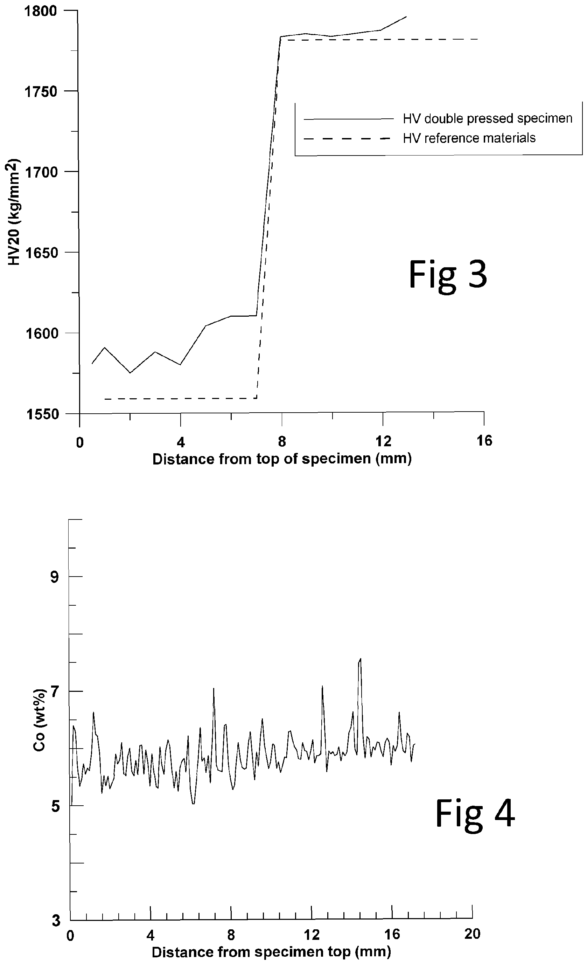

After sintering, the sintered body was cut in half, and the Co content and HV20 measured along the centre of the polished sample. The results are shown, together with lines showing the hardness of the reference materials, in Fig 3.

The Co content was measured, also along the central axis, using wavelength dispersive X-ray spectroscopy (WDS) in a microprobe. The result is shown in Fig. 4.

Both Fig. 3 and Fig. 4 clearly show that the original distribution of Co in the green body largely survived intact during sintering, resulting in a sintered body with two distinct parts in terms of hardness, with a sharp change in hardness at the interface between the two powders.

### Example 2 (comparison)

An insert was pressed from two WC/Co powders, both with 6 w% Co but no alloying elements in the binder. As in Example 1, the WC grain sizes where different in the green body, 1.3 µm in the top half and 2.3 µm in the bottom half (the powder ratio was approximately 50/50 % by volume). The green body was the same size and shape as in Example 1. The 20 kg load Vickers hardness (HV20) of sintered bodies of the pure top powder was 1573, and HV20 of the pure sintered bottom powder was 1439. The Co-magnetic value again was similar in the two powders.

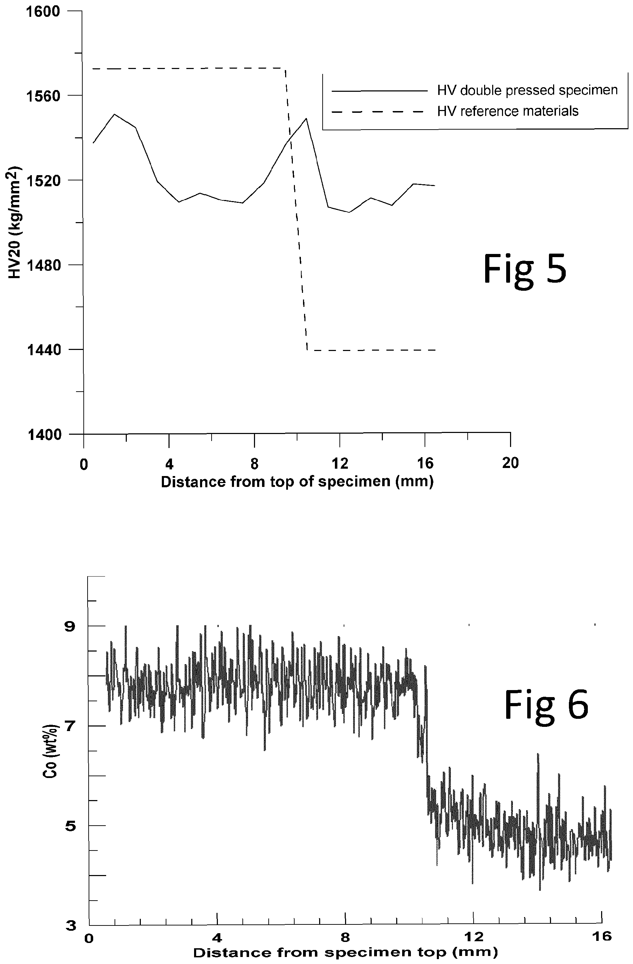

After sintering, the sintered body was cut in half, and the Co content and HV20 measured along the centre of the polished sample. The results are shown, together with lines showing the hardness of the reference materials, in Fig 5.

The Co content was measured, also along the central axis, using wavelength dispersive X-ray spectroscopy (WDS) in a microprobe. The result is shown in Fig. 6.

It is clear from Fig. 5 and 6, that the Co, which was evenly distributed in the green body (same weight percent in both powders), has been redistributed during sintering. This has led to an evening out of the hardness in the sintered body, to a value in between the hardness values of the sintered reference materials.

### Example 3 (comparison)

An insert was pressed from two WC/Co powders, both with 6 w% Co, with 0.6 wt% Cr in the top powder but no alloying elements in the binder for the bottom one. The WC grain sizes where different in the green body, 1.5 µm in the top half and 1.1 µm in the bottom half with a powder ratio of approximately 50/50 % by volume. The green body was the same size and shape as in Example 1 and 2. The 20 kg load Vickers hardness (HV20) of sintered bodies of the pure top powder was 1559, and HV20 of the pure sintered bottom powder was 1640.

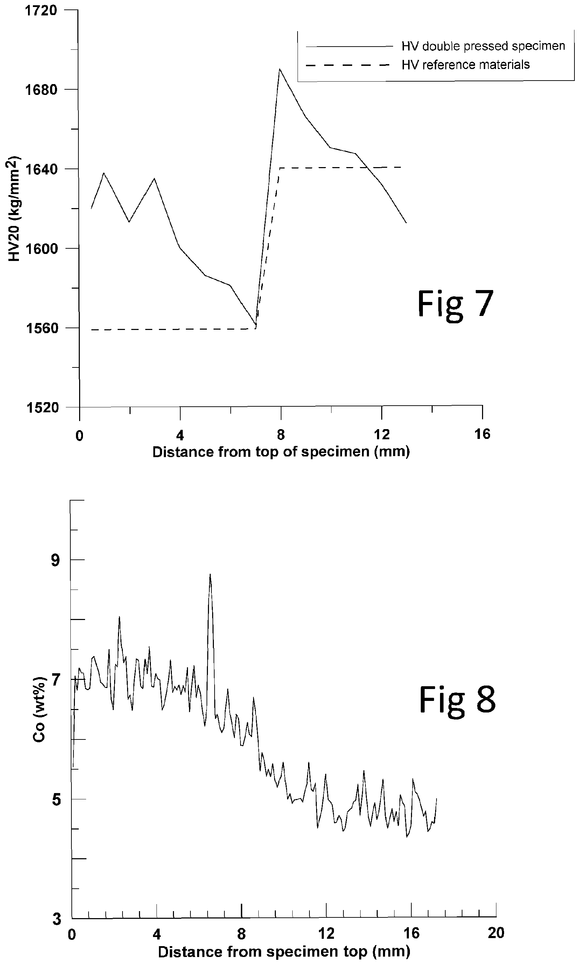

After sintering, the sintered body was cut in half, and the Co content and HV20 measured along the centre of the polished sample. The results are shown, together with lines showing the hardness of the reference materials, in Fig 7.

The Co content was measured, also along the central axis, using wavelength dispersive X-ray spectroscopy (WDS) in a microprobe. The result is shown in Fig. 8.

It is clear from Fig. 7 and 8, that the Co, which was evenly distributed in the green body (same weight percent in both powders), has been redistributed during sintering. This has led to an irregular hardness distribution, with a softening in the top part, and an increase in hardness in the bottom part.

It should be understood that any one or more of the embodiments could be combined together.

## Claims

1. A sintered cemented carbide insert (2) for mining or cutting applications comprising:
a first zone (4) comprising:
3-18 wt% binder phase;
any unavoidable impurities;
a balance of tungsten carbide having a mean grain size of between 0.5-20 µm; and
a second zone (6) comprising:
the same amount, within +/-3 wt%, of binder phase as the first zone (4);
any unavoidable impurities;
a balance of tungsten carbide having a mean grain size of between 0.5-20 µm;
wherein the first zone (4) and the second zone (6) are adjacent to each other;
wherein the average WC grain size in the first zone (4) is different to the average WC grain size in the second zone (6);
**characterized in that:**
the binder phase in both the first zone (4) and the second zone (6) comprise between 2-15 wt% Cr measured as a fraction of the total binder content.

2. The insert (2) according to claim 1 further comprising one or more hard carbides selected from TiC, TaC and / or NbC in the first zone (4) and / or the second zone (6).

3. The insert (2) according to claim 1 or 2 wherein the difference between in the average grain size between the first zone (4) and the second zone (6) is > 0.5µm.

4. The insert according to any of the previous claims wherein the difference between the binder phase content in the first zone (4) and the second zone (6) is less than 1.5 wt%.

5. The insert (2) according to any of the previous claims wherein the insert (2) comprises a base (8); a working tip (10); a core (12) and a longitudinal central axis (14).

6. The insert (2) according to claim 5 wherein the first zone (4) is positioned at the working tip (10) and the second zone (6) is positioned at the base (8) and wherein the first zone (4) has an average WC grain size between 1-2 µm and the second zone (6) has an average WC grain size between 3-16 µm.

7. The insert (2) according to claim 5 wherein the first zone (4) is positioned at the working tip (10) and the second zone (6) is positioned at the base (8) and wherein the first zone (4) has an average WC grain size between 3-16 µm and the second zone (6) has an average WC grain size between 1-2 µm.

8. The insert according to any of the previous claims wherein the hardness difference between the first zone 4 and the second zone 6 is > 50 HV20 measured according to ISO EN6507 3:2005.

9. The insert (2) according to any of the previous claims wherein an interface (16) between the first zone (4) and the second zone (6) is substantially straight.

10. The insert (2) according to any of claims 1-8, wherein the interface (16) between the first zone (4) and the second zone (6) is dome shaped.

11. A method of producing a cemented carbide insert according to any of claims 1-10, comprising the steps of:
a) providing a first powder comprising between 3-18 wt% binder, 2-15 wt% Cr measured as a fraction of the total binder content, and any unavoidable impurities and a balance of WC hard phase having a grain size of 0.5-20 µm;
b) pre-punching the first powder to provide a first part of a green body;
c) providing a second powder comprising between 3-18 wt% binder, 2-15 wt% Cr and any unavoidable impurities and a balance of WC hard phase having a grain size of 0.5-20 µm;
d) pressing the second powder on top of the first part of the green body to provide a second part of the of the green body;
c) sintering the entire green body to form the sintered cemented carbide insert (2) having a first zone (4) and a second zone (6).

12. The method according to claim 11 wherein after sintering the cemented carbide insert (2) is tumbled.

13. The method according to claim 11 or claim 12 wherein the pressing pressure used for the pre-punching of the first powder is less than the pressing pressure used for pressing the second powder on top of the first part of the green body.
